# EUROPEAN PATENT APPLICATION

(11) **EP 4 730 635 A1**
(43) Date of publication of application: **22.04.2026**
(21) Application number: 23941629.0
(22) Date of filing: 16.06.2023
(51) Int. Cl.: H02M 7/12, H02M 7/487, H02M 7/49

(54) **ELECTRIC POWER CONVERSION APPARATUS**

(71) Applicant: MITSUBISHI ELECTRIC CORPORATION, Chiyoda-ku Tokyo 100-8310 (JP)
(72) Inventor: KINOSHITA, Tetsunori, Tokyo 100-8310 (JP)
(74) Representative: Hoffmann Eitle
(86) International application number: PCT/JP2023/022368
(87) International publication number: WO 2024/257327

(57) **Abstract**

Provided are a main converter 3 that is connected to an inductor 2 on one end side and in which a DC positive electrode (P), a DC negative electrode (N), and a neutral point(O) are set on the other end side, a capacitor circuit 5 having a positive electrode terminal (P), a negative electrode terminal (N), and a neutral point (O) that are to be connected to a DC side, a sub-converter 4 including a capacitor Csx and a plurality of elements (Sₓ₇ to Sₓ₁₀), being connected between the neutral point (O) of the capacitor circuit 5 and the neutral point (O) of the main converter 3, and configured such that a capacitor voltage (Vsx) changes in accordance with a combination of open/close settings on the elements (Sₓ₇ to Sₓ₁₀), and a control unit 6 to control operations of the main converter 3 and the sub-converter 4.

## Description

### Technical Field

The present application relates to an electric power conversion device.

### Background Art

Power conversion devices such as an inverter and a converter that convert power between a DC and a three-phase AC are used for various applications and are required to be reduced in size and weight. Therefore, a multilevel power conversion device (for example, refer to Patent Document 1 and Non-patent Document 1) is used in order to reduce the volume of passive components such as capacitors, inductors, and resistors in the power conversion device.

In the multilevel power conversion device, semiconductor switching elements and smoothing capacitors handle voltages lower than the DC voltage, allowing the application of low breakdown voltage semiconductor switching elements and low breakdown voltage capacitors. This enables high power output and high power density. Further, since multilevel voltages can be output, the energy stored in an inductor can be reduced by increasing the number of voltage levels, thereby reducing the size and loss of the inductor.

### Prior Art Document

### Patent Document

Patent Document 1: Japanese Patent Application Laid-Open No. 2021-100363 (paragraphs 0020 to 0025, FIG. 1)

Non-patent Document 1: B. Singh, B. N. Singh, A. Chandra, K. Al-Haddad, A. Pandey and D. P. Kothari, "A review of three-phase improved power quality AC-DC converters," in IEEE Transactions on Industrial Electronics (U.S.), vol. 51, no. 3, pp. 641-660, June 2004, doi: 10.1109/TIE.2004.825341.

### Summary of the Invention

### Problems to be Solved by the Invention

On the other hand, in the typical multilevel power conversion device such as diode-clamped, flying capacitor, and cascaded connection methods, many semiconductor switching elements, bidirectional semiconductor switching elements, capacitors, and the like are added. For example, in the diode-clamped method, many diodes are added, and in the case of four or more levels, capacitor balance control becomes complicated, and the volume increases due to an external voltage balance circuit. In the flying capacitor method, balance control of the capacitor voltage is simple, but many capacitors are required, and the size of the device increases. In the cascaded connection method, since a DC unit cannot be shared, an independent DC power source is required, and the size and weight of the device increase. That is, in any of the methods, conventional multilevel power conversion devices have a problem in that the volume and cost of the power conversion device increase.

The present disclosure discloses a technique for solving the above-described problem, and an object thereof is to obtain a power conversion device capable of outputting multilevel voltages without increasing the size and weight of the device by applying low breakdown voltage semiconductor switching elements.

### Means for Solving the Problems

A power conversion device of the present disclosure includes: an inductor provided for each of phases on an AC side; a main converter that is connected to the inductor on one end side and in which a DC positive electrode, a DC negative electrode, and a neutral point are set on the other end side; a capacitor circuit having a positive electrode terminal, a negative electrode terminal, and a neutral point that are to be connected to a DC side; a sub-converter including a capacitor and a plurality of semiconductor switching elements, being connected between the neutral point of the capacitor circuit and the neutral point of the main converter, and configured such that a capacitor voltage changes in accordance with a combination of open/close settings on the plurality of semiconductor switching elements; and a control unit to control operations of the main converter and the sub-converter.

### Advantageous Effect of Invention

According to the power conversion device of the present disclosure, a low breakdown voltage semiconductor switching element can be applied to a sub-converter, and a power conversion device capable of outputting multilevel voltages can be obtained without increasing the size and weight of the device.

### Brief Description of the Drawings

FIG. 1A and FIG. 1B are a circuit diagram for describing a configuration of a power conversion device and a circuit diagram for describing a configuration of a sub-module that constitutes a power conversion circuit, respectively, according to Embodiment 1.
FIG. 2 is a circuit diagram for describing a power conversion circuit for one phase of the power conversion device according to Embodiment 1.
FIG. 3 is a table showing output terminal voltages and settings of switches for each of switching states in the power conversion device according to Embodiment 1.
Each of FIG. 4A to FIG. 4F is a diagram showing a conduction path for each switching state in the power conversion circuit for one phase of the power conversion device according to Embodiment 1.
FIG. 5 is a table showing the output terminal voltage, an output voltage with respect to a current direction, the charge/discharge state of a capacitor of the sub-converter, and the charge/discharge states of a positive-side capacitor and a negative-side capacitor for each switching state in the power conversion device according to Embodiment 1.
FIG. 6 is a circuit diagram for describing a configuration of a control unit constituting the power conversion device according to Embodiment 1.
FIG. 7A and FIG. 7B are diagrams schematically showing transition of modes and switching states in the power conversion device when the current direction is positive and negative, respectively, according to Embodiment 1.
FIG. 8 is a schematic diagram showing transition of modes and switching states in the case where the current direction is positive together with a conduction path in the power conversion circuit for one phase in the power conversion device according to Embodiment 1.
FIG. 9 is a schematic diagram showing transition of modes and switching states in the case where the current direction is negative together with a conduction path in the power conversion circuit for one phase in the power conversion device according to Embodiment 1.
FIG. 10A to FIG. 10D are diagrams showing time-series transition of modes set when a zero-voltage generation unit is not provided and provided in the power conversion device in each of the case where the current is positive and negative.
FIG. 11 is a block diagram showing a hardware configuration example of the control unit constituting the power conversion device of the present disclosure.

### Mode for Carrying out Invention

### Embodiment 1

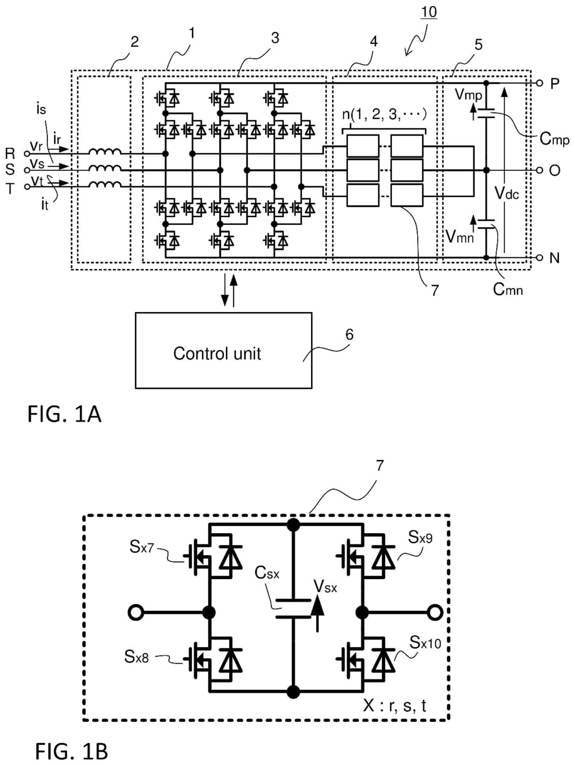

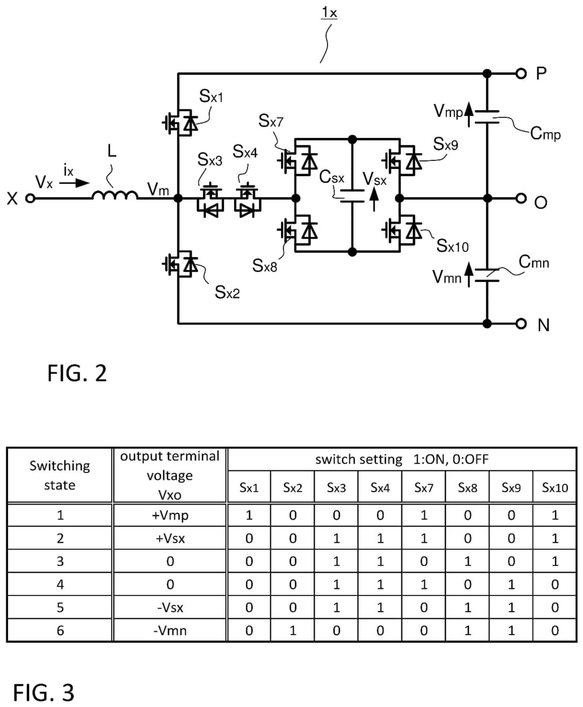

FIG. 1A to FIG. 10D are for describing a configuration and an operation of a power conversion device according to Embodiment 1, FIG. 1A is a circuit diagram for describing the configuration of the power conversion device, FIG. 1B is a circuit diagram of a sub-module constituting a sub-converter of a power conversion circuit, and FIG. 2 is a circuit diagram for describing a power conversion circuit for one phase when the sub-converter is configured using one sub-module shown in FIG. 1B for each phase.

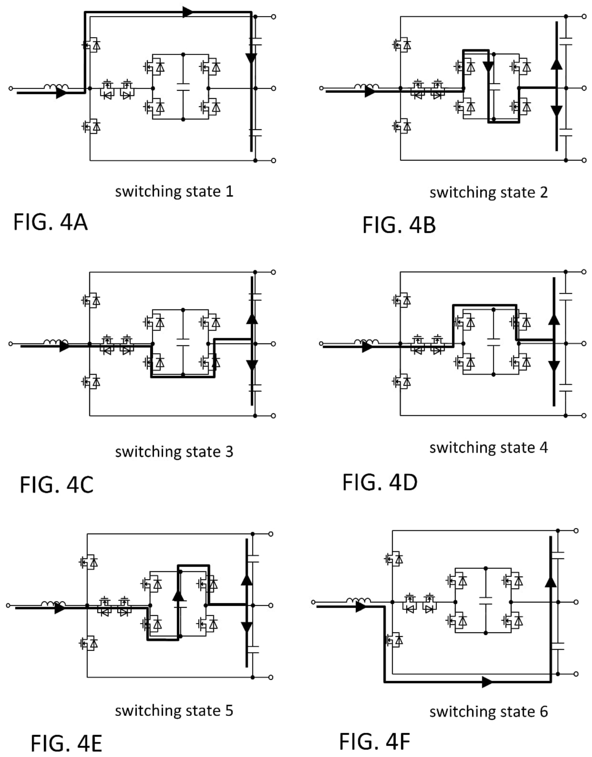

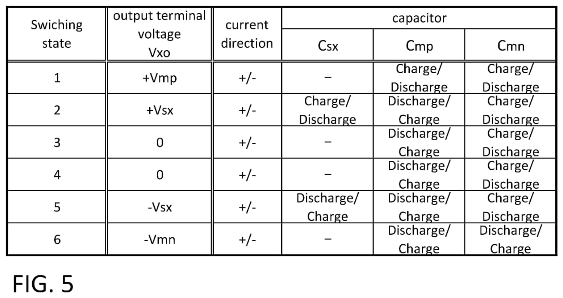

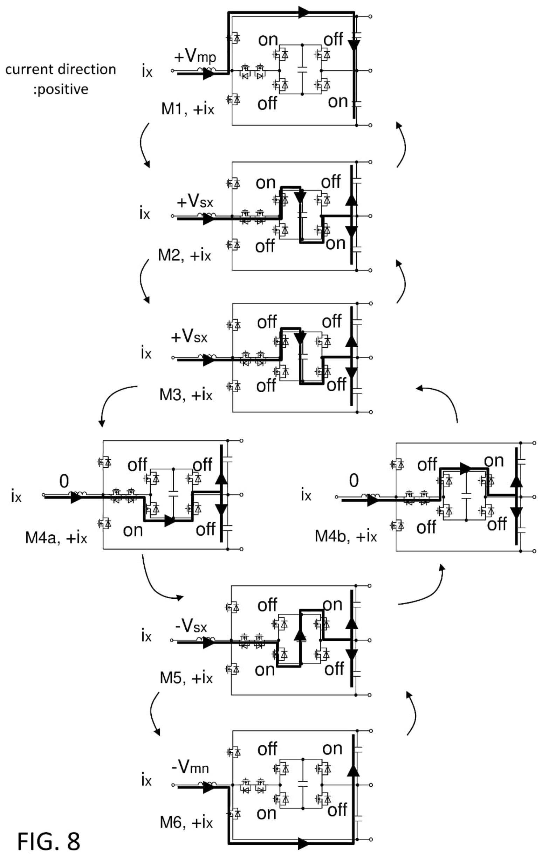

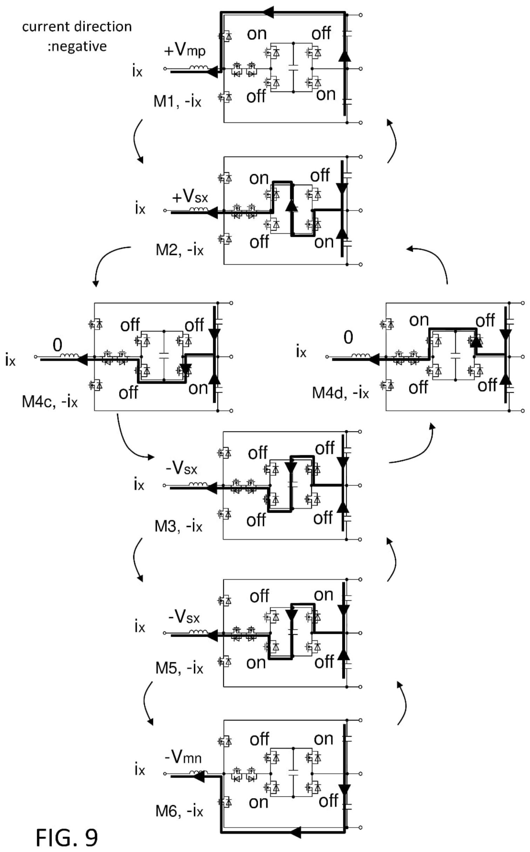

FIG. 3 is a table showing an output terminal voltage and an open/close (on/off) setting of a switch for each of switching states in the power conversion circuit for one phase shown in FIG. 2, each of FIG. 4A to FIG. 4F is a diagram showing a conduction path for each switching state shown in FIG. 3 in the power conversion circuit for one phase shown in FIG. 2, and FIG. 5 is a table showing the output terminal voltage, the output terminal voltage with respect to the current direction, the charge/discharge state of a capacitor of the sub-converter, and the charge/discharge states of a positive-side capacitor and a negative-side capacitor for each switching state shown in FIG. 3. Note that, in FIG. 4A to FIG. 4F, the power conversion circuit itself is drawn with a thin line in order to emphasize the current path. The same applies to FIG. 8 and FIG. 9 to be described later.

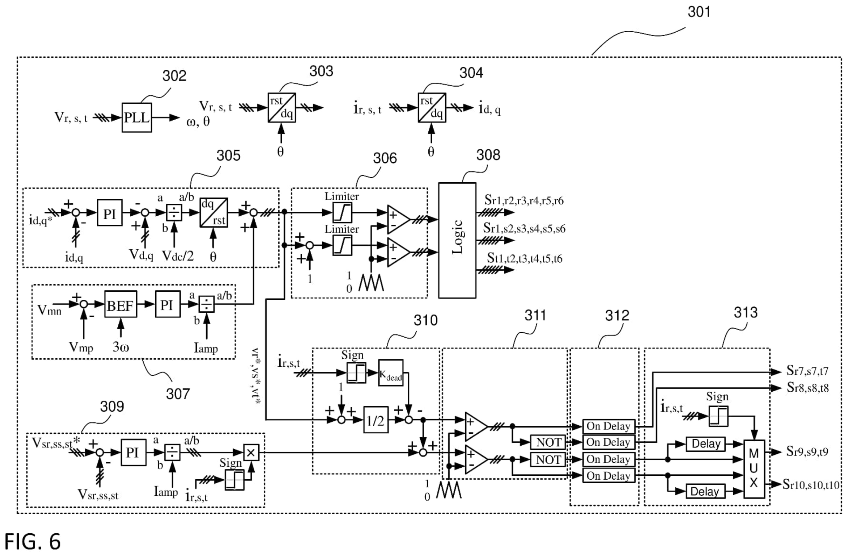

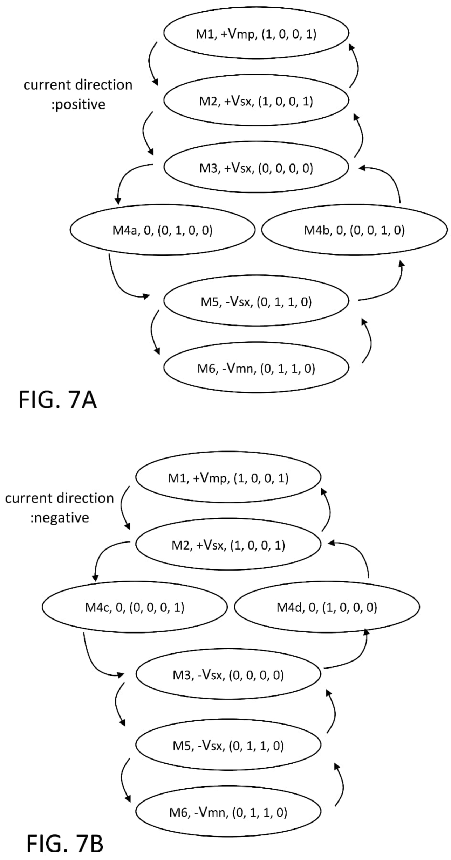

In addition, FIG. 6 is a circuit diagram for describing a configuration of a control unit that controls switching of the switching states described above, FIG. 7A is a diagram schematically showing transition of modes and the switching states together with setting values in a case where a current direction is positive, and FIG. 7B is a diagram schematically showing transition of the modes and the switching states together with a setting value in a case where a current direction is negative. Note that in FIG. 7A and FIG. 7B, the mode, the output terminal voltage, and the open/close state of each of four switches are described in this order from the left.

FIG. 8 is a schematic diagram corresponding to FIG. 7A, showing the transition of the modes and the switching states when the current direction is positive together with the conduction path in the power conversion circuit for one phase, and FIG. 9 is a schematic diagram corresponding to FIG. 7B, showing the transition of the modes and the switching states when the current direction is negative together with the conduction path in the power conversion circuit for one phase.

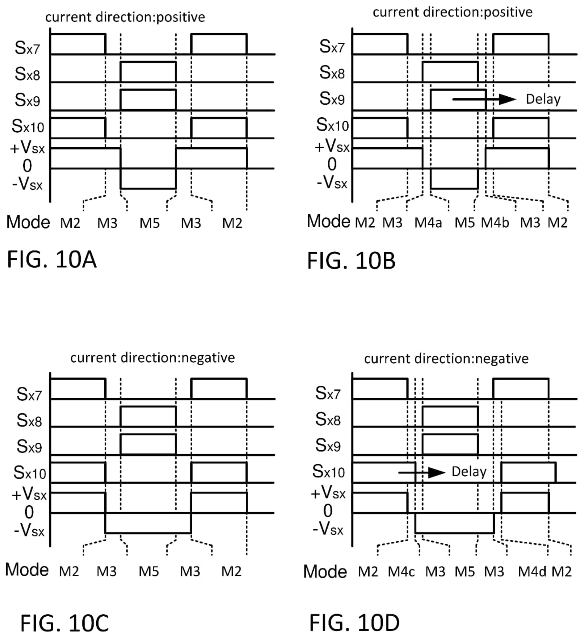

FIG. 10A to FIG. 10B are diagrams showing time-series transition of the modes set on the switching elements in the sub-module when a zero-voltage generation unit is not provided and provided in the case where the current is positive, respectively. FIG. 10V to FIG. 10D are diagrams showing time-series transition of the modes set on the switching elements in the sub-module when the zero-voltage generation unit is not provided and provided in the case where the current is negative, respectively.

As shown in FIG. 1A, the power conversion device 10 of the present disclosure includes a power conversion circuit 1 having DC-side terminals P, O, and N connected to a DC power source or a DC device and AC-side terminals R, S, and T connected to an AC power source or an AC device, and the control unit 6 that controls an operation of the power conversion circuit.

In the power conversion circuit 1, an inductor 2, a main converter 3, and a capacitor circuit 5 are arranged in this order from the AC-side terminals (R, S, T) toward the DC-side terminals (P, O, N). The sub-converter 4 in which a plurality of the sub-modules 7 as shown in FIG. 1B are connected in series is disposed between respective neutral points O of the main converter 3 and the capacitor circuit 5.

By outputting multilevel voltages from AC-side output terminals (R, S, T) of the main converter 3, differential voltages between the multilevel voltages and AC-side terminal voltages are applied to the inductors 2 connected between the main converter 3 and the AC-side terminals (R, S, T). The sub-converter 4 is connected between the neutral point O of the DC-side terminals and DC-side terminals of the main converter 3. Respective terminals of the main converter 3 are connected to a positive electrode terminal P and a negative electrode terminal N of the DC-side terminals. The main converter 3 can output the multilevel voltages by outputting voltages corresponding to a positive electrode voltage, a negative electrode voltage, and an output terminal voltage of the sub-converter 4.

Note that, although the main converter 3 in the power conversion circuit 1 shown in FIG. 1A is a power conversion circuit of an active neutral point clamped method capable of bidirectional power conversion, the main converter 3 may be configured to be capable of unidirectional power conversion, in which case the number of semiconductor switching elements can be reduced by replacing the semiconductor switching elements of the main converter 3 with diodes. In FIG. 1B, as one sub-module 7 being a two-level converter including at least one capacitor, in the sub-converter 4, at least one sub-module 7 is connected to each of the neutral points O of the main converter 3 and the capacitor circuit 5. Assuming that the neutral point voltage is in a reference potential (GND, 0V), the output terminal voltages of the sub-converter 4 are a positive voltage, a negative voltage, and 0V of a capacitor voltage Vsx of the sub-converter 4.

The control unit 6 controls open/close (ON/OFF) operations of the switches of the main converter 3 and the sub-converter 4 on the basis of information such as AC-side output terminal voltages vr, vs, and vt, a positive electrode side capacitor voltage Vmp, a negative electrode side capacitor voltage Vmn, capacitor voltages Vsr, Vss, and Vst (denoted by "Vsx" in FIG. 1B) of the sub-converter 4, and inductor currents ir, is, and it.

The control unit 6 controls each of the capacitor voltages of the sub-converter 4. Further, the control unit 6 controls the positive electrode voltage and the negative electrode voltage. Furthermore, the control unit 6 controls the inductor currents. Note that the state quantity to be controlled may be changed depending on a system (a voltage source, a current source, and a passive component) connected to the input/output side.

The main converter 3 and the sub-converter 4 are not limited to the exemplified configuration, and may be of a two-level method, a diode-clamped method, a flying capacitor method, a T-type method, a neutral point clamped method, or the like, and the number of output levels is not limited to the two levels and the three levels, and may be another number of output levels. However, the main converter 3 needs to employ a configuration connectable to the neutral points, and the sub-converter 4 is connected between neutral point connection points of the main converter 3 and the neutral point of the capacitor circuit 5. The capacitor Csx of the sub-converter 4 may be an external power supply such as a battery. When the power conversion is limited to unidirectional power conversion from an AC to a DC only, a part of the semiconductor switching elements of the main converter 3 and the sub-converter 4 may be changed to diodes.

The semiconductor switching element may be, in addition to a metal-oxide-semiconductor field-effect transistor (MOSFET) or an insulated gate bipolar transistor (IGBT) based on silicon (Si) or silicon carbide (SiC), a power transistor based on gallium nitride (GaN), a power transistor based on gallium oxide (GaO), or the like. Although one semiconductor switching element is shown on the schematic symbol, the semiconductor switching elements may be provided in multi-parallel or in multi-series connection in order to increase the current capacity or the breakdown voltage. In the case of multi-parallel or multi-series connection, the semiconductor switching elements may have a configuration in which the above-described IGBT based on silicon, the MOSFET based on silicon carbide, and the like are mixed.

As long as the inductor 2 connected between each AC-side terminal and the main converter 3 has at least one inductor L, other passive components may be connected in series and parallel to the inductor 2. An LC filter, an LCL filter, or the like may be connected in order to remove harmonic switching noise, and a damping circuit that suppresses a resonance phenomenon of the filter may be provided.

The control unit 6 may include one or more controllers, and for example, a different controller may be applied to the main converter 3 and the sub-converter 4, or controllers divided into the main converter 3 and the sub-converter 4 corresponding to each phase may be used. The communication between the controllers may be either wired communication or wireless communication, and the current detection value, the voltage detection value, the temperature detection value, the gate signal, and the like of the power conversion circuit 1 may be connected to the control unit 6 in a wired manner or in a wireless manner.

The control unit 6 is composed of a central processing unit (CPU), a digital signal processor (DSP), a field-programmable gate array (FPGA), an analog circuit, or the like. Control that causes the positive electrode voltage and the negative electrode voltage to be the same may be applied. The differential voltage between the positive electrode voltage and the negative electrode voltage is controlled to be zero, and the capacitor voltage Vsx of the sub-converter 4 is controlled to be a predetermined voltage. Each voltage control of the control unit 6 is, for example, proportional-integral (PI) control for bringing a target voltage and a voltage detected by the voltage detection unit close to each other.

A voltage detection means may directly detect a voltage at both ends of each of a positive electrode side capacitor Cmp and a negative electrode side capacitor Cmn as the positive electrode voltage and the negative electrode voltage. The negative electrode voltage or the positive electrode voltage may be estimated by subtracting the positive electrode side capacitor voltage Vmp or the negative electrode side capacitor voltage Vmn from the voltage between the positive electrode terminal and the negative electrode terminal, respectively. The capacitor voltage Vsx of the sub-converter 4 may be estimated from the capacitor current value. In order to reduce the number of voltage sensors, the capacitor voltage Vsx of the sub-converter 4 may be estimated from the switching patterns of the main converter 3 and the sub-converter 4, the inductor currents ir, is, and it, the positive electrode voltage, the negative electrode voltage, and the like.

In addition, in order to control the input/output power, the control unit 6 may detect the inductor currents ir, is, and it, perform dq (direct/quadrature) transformation, and control the dq transformed current by PI control or the like. The inductor currents of all the three phases may be detected, or the inductor currents of two phases may be detected and the current of the third phase may be calculated on the basis of Kirchhoff's first law. The phases may be synchronized using a PLL (Phase Locked Loop) by detecting the AC voltages of all three phases. The AC voltage of only one phase may be detected, and the AC voltages that are not detected may be calculated using the fact that the phases are shifted by 120 degrees between the phases.

In order to reduce the number of current sensors, the inductor currents ir, is, and it may be estimated from inductor voltages, the AC-side terminal voltages, a main converter output voltage command value in the control unit 6, and the like. A device including a passive component, an electronic component, a semiconductor switching element, or the like may be connected to a destination side of the AC terminal side, and terminals output from the device may be connected to the DC-side terminals. That is, a common mode filter, a normal mode filter, a sub-module, or the like may be connected.

Similarly, terminals output from a device such as those described above connected to a destination side of the DC-side terminals may be connected to the AC-side terminals. For example, a motor, a generator, an AC system, a load including a passive component, a component that behaves like a current source or a voltage source, or the like may be connected to a destination side of the AC-side terminals. For example, a solar cell, a fuel cell, a storage battery, a load including a passive component, a light-emitting diode (LED), a power conversion device, a device that behaves like a current source or a voltage source, or the like may be connected to a destination side of the DC-side terminals.

Although the AC terminal side having three phases is shown, the AC terminal side may have a single-phase or a multi-phase, and the phase-wire configuration is not limited. In the case of a single-phase configuration, a half-bridge configuration or a full-bridge configuration may be adopted, or a V-connection scheme in which one phase is connected to an AC terminal and a neutral point may be adopted even in the case of three phases. The voltages of the sub-modules 7 may all be the same voltage or different voltages. As the modulation method of the sub-module 7, a known modulation method used in a single-phase circuit, such as a bipolar modulation method, a unipolar modulation method, or a hybrid modulation method, can be used.

The switching frequency of the main converter 3 may be a fundamental wave frequency on the AC side to reduce the switching loss. The switching loss may be reduced by making the switching frequencies of the main converter 3 and the sub-converter 4 different from each other. In order to reduce the loss of the main converter 3, a one-pulse voltage may be output from the main converter 3, and control for compensating for the differential voltage by the sub-converter 4 may be applied. However, the absolute value of the voltage output from the sub-converter 4 needs to be lower than the absolute values of the positive electrode voltage and the negative electrode voltage.

FIG. 2 is a circuit diagram of a power conversion circuit 1x for one phase when the power conversion circuit 1 is formed using the sub-converter 4 in which the number of sub-modules 7 for each phase is one (n=1). In FIG. 2, the configuration of the switching elements (elements Sₓ₁ to Sₓ₄) corresponding to the main converter 3 is of the T-type method, but may be of the diode-clamped method, the flying capacitor method, a neutral point clamped method, or the like.

When the sub-module 7 is not interposed between the neutral points O of the main converter 3 and the capacitor circuit 5, the three-level output is possible, but when one sub-module 7 is interposed, the five-level output becomes possible. Since the five-level output is possible, there are six switching states as shown in FIG. 3 when the states are classified according to the output voltages.

In each of the six switching states, the open/close of the switching elements (elements Sₓ₁ to Sₓ₄) constituting the main converter 3 and the switching elements (elements Sₓ₇ to Sₓ₁₀) constituting the sub-converter 4, that is, the switch setting is determined. In FIG. 3, which is in a table format, the switching state, the output terminal voltage Vxo, and the switch setting ("1" for ON (close) and "0" for OFF (open)) of each of the switching elements (elements Sₓ₁ to Sₓ₄, and Sₓ₇ to Sₓ₁₀) are shown from the left.

In the power conversion device of the three-level circuit, the output terminal voltages are only +Vmp, 0, and -Vmn. On the other hand, by interposing the sub-converter 4 between the neutral points O, as shown in FIG. 3, it becomes possible to output voltages of +Vsx and -Vsx as well as the output terminal voltages of +Vmp, 0, and -Vmn, and it becomes possible to output multilevel voltages even more.

The conduction paths in the power conversion circuit 1x in each of the six switching states shown in FIG. 3 are shown in FIG. 4A to FIG. 4F. Here, the current direction from the AC to the DC (rightward) is defined as positive. That is, FIG. 4A to FIG. 4F show a case where the current direction is positive.

A switching state 1 is a case where the converter output terminal voltage Vxo is +Vmp. In the switching state 1, as shown in FIG. 4A, no current flows into the capacitor Csx of the sub-module 7, and therefore the capacitor voltage Vsx does not change. On the other hand, in the capacitor circuit 5 on the DC terminal side, the current flows into the capacitors Cmp and Cmn, and thus the capacitor voltages Vmp and Vmn increase.

A switching state 2 is a case where the converter output terminal voltage Vxo is +Vsx. In the switching state 2, the current flows into the capacitor Csx of the sub-module 7 as shown in FIG. 4B, and thus the capacitor voltage Vsx increases. On the other hand, in the capacitor circuit 5, the current flows out from the capacitor Cmp, and thus the capacitor voltage Vmp decreases, and the current flows into the capacitor Cmn, and thus the capacitor voltage Vmn increases.

A switching state 3 is a case where the converter output terminal voltage Vxo is 0V. In the switching state 3, since no current flows through the capacitor Csx of the sub-module 7 as shown in FIG. 4C, the capacitor voltage Vsx does not change. On the other hand, in the capacitor circuit 5, the current flows out from the capacitor Cmp, and thus the capacitor voltage Vmp decreases, and the current flows into the capacitor Cmn, and thus the capacitor voltage Vmn increases.

A switching state 4 is a case where the converter output terminal voltage Vxo is 0V. In the switching state 4, since no current flows through the capacitor Csx of the sub-module 7 as shown in FIG. 4D, the capacitor voltage Vsx does not change. On the other hand, in the capacitor circuit 5, the current flows out from the capacitor Cmp, and thus the capacitor voltage Vmp decreases, and the current flows into the capacitor Cmn, and thus the capacitor voltage Vmn increases.

In a switching state 5, the converter output terminal voltage Vxo is - Vsx. In the switching state 5, the current flows out to the capacitor Csx of the sub-module 7 as shown in FIG. 4E, and thus the capacitor voltage Vsx decreases. On the other hand, in the capacitor circuit 5, the current flows out from the capacitor Cmp, and thus the capacitor voltage Vmp decreases, and the current flow into the capacitor Cmn, and thus the capacitor voltage Vmn increases.

In a switching state 6, the converter output terminal voltage Vxo is - Vmp. In the switching state 6, since no current flows into the capacitor Csx of the sub-module 7 as shown in FIG. 4F, the capacitor voltage Vsx does not change. On the other hand, in the capacitor circuit 5, since the current flows out from the capacitors Cmp and Cmn, the capacitor voltages Vmp and Vmn decrease.

By switching the above-described switching states at high speed, the output terminal voltage Vxo averaged in a certain cycle can be controlled.

FIG. 5 shows, in a table format, the switching state, the converter output terminal voltage Vxo with respect to the current direction, the direction of the current, the charge/discharge state of the capacitor Csx of the sub-converter 4, and the charge/discharge states of the positive-side capacitor Cmp and the negative-side capacitor Cmn. The direction in which the current flows from the AC side to the DC side is defined as positive (+), while the opposite direction is defined as negative (-).

As shown in FIG. 5, when the direction of the current is positive, the capacitor of the sub-converter 4 is charged in the switching state 2 and discharged in the switching state 5. That is, the capacitor voltage can be controlled by adjusting the time ratio between the switching state 2 and the switching state 5. The same applies to the case where the direction of the current is negative.

When the direction of the current is positive, the capacitor Cmp on the DC positive electrode side is charged in the switching state 1 and discharged in the other switching states, and the capacitor Cmn on the DC negative electrode side is discharged in the switching state 5 and charged in the other switching states. When the direction of the current is negative, the charge/discharge relationship is reversed. Accordingly, the voltage of the capacitor circuit 5 on the DC side can be controlled by changing the time ratio of each switching state.

An example of the contents of the control unit 6 will be described with reference to FIG. 6. A control system 301 has a power factor adjustment function, a DC side capacitor voltage balance function, a capacitor voltage balance function in the sub-module 7, and a multilevel generation function. The control system 301 includes a PLL unit 302 that calculates a frequency and a phase from the AC voltage, a coordinate transformation unit 303 that performs dq transformation on three-phase voltages, that is, transforms three AC signals into two DC signals, and a coordinate transformation unit 304 that performs dq transformation on three-phase currents.

Further, an inductor current control unit (power factor control unit) 305 that controls the current of the inductor L such that the error between the current command value and the actual current becomes zero, and a pulse width modulation (PWM) unit 306 that generates a high-frequency switching signal and modulates the pulse width of the main converter 3 are provided. Furthermore, a voltage control unit 307 that controls the voltage of the capacitor circuit 5 such that the difference between the capacitor voltage Vmp and the capacitor voltage Vmn in the capacitor circuit 5 becomes zero, and a logic unit 308 that adds dead time to switching signals to prevent a failure caused by an element short circuit are provided.

Further, there are provided a capacitor voltage control unit 309 that controls the capacitor voltage Vsx in the sub-module 7 such that an error between the capacitor voltage Vsx connected to each module and a target voltage command value becomes zero, and a command value generation unit 310 that generates a command value of the sub-converter 4. Further, there are provided a PWM unit 311 that generates a high-frequency switching signal, a dead time generation unit 312 that adds dead time to prevent a failure caused by an element short circuit of the sub-converter 4, and the zero-voltage generation unit 313 that generates a signal such that a voltage between terminals of the sub-converter 4 becomes zero.

The PLL unit 302 to the logic unit 308 are functions to control the main converter 3, and the capacitor voltage control unit 309 to the zero-voltage generation unit 313 are functions added in the present disclosure to control the sub-converter 4. In the case of the three-level circuit configuration, the output voltage levels are three levels, and the voltages of the sub-converter 4 cannot be balanced. On the other hand, by adding the above-described new functions, the output voltage level becomes multilevel, the voltage balance of the sub-converter 4 becomes possible, and the device can be miniaturized.

Although the PLL unit 302 detects voltages of the three phases, the PLL may be configured to detect only one phase. Although the coordinate transformation units 303 and 304 detect three-phase voltages and currents, the dq transformation may be configured by detecting only one phase or two phases. An αβ coordinate transformation may be used for the coordinate transformation. Current control may be performed for each of the three phases without performing the coordinate transformation. The power factor control unit 305 may improve the power factor using a PI controller.

Using the PI controller, error currents between the current command values id*, iq* and the current detection values id, iq in the dq coordinate system are converted into compensation voltages, and AC voltages Vd, Vq in the dq coordinate system are added to be divided by a DC voltage. Accordingly, the voltage command values to be output by the power conversion device in the dq coordinate system are generated, and then the three-phase voltage command values are generated using the voltage phase 0.

The voltage control unit 307 calculates a difference between the detection values of the capacitor voltages Vmn and Vmp. Then, a signal from which a frequency three times the AC power source frequency is removed by a band elimination filter (BEF) is converted into a compensation current by the PI controller, and the compensation current is divided by the maximum value of the inductor current to calculate a compensation amount. By adding the compensation amount described above to the three-phase voltage command values calculated by the inductor current control unit (power factor control unit) 305, the charge/discharge amount of the capacitor circuit 5 is changed to bring the differential voltage between the capacitor voltages Vmp and Vmn close to 0.

The PWM unit 306 compares the magnitude relationship between the three-phase voltage command values and a triangular wave (or sawtooth wave or the like) to generate pulses. The logic unit 308 adds dead time to prevent an element short circuit and outputs an ON/OFF signal each to the semiconductor switching elements (elements Sₓ₁ to Sₓ₄).

In the capacitor voltage control unit 309, using a PI controller, the error voltages (differences) between the capacitor voltage command values Vsr*, Vss*, and Vst* and the detection values of the capacitor voltages Vsr, Vss, and Vst are converted into compensation currents to be divided by the maximum value of the inductor current, and since the charge/discharge direction changes depending on the polarity of the current as shown in FIG. 5, the polarity is changed in accordance with the current polarity.

When the detection values of the capacitor voltages Vsr, Vss, and Vst are smaller than the capacitor voltage command values Vsr*, Vss*, and Vst*, the compensation amounts become positive values, and when the current polarity is positive, the period of the switching state 2 becomes longer than that of the switching state 5, and when the current polarity is negative, the period of the switching state 2 becomes shorter than that of the switching state 5, and the capacitors are charged to follow the command values.

The PWM unit 311 generates pulses for the sub-converter 4 based on the above-described compensation amounts and the three-phase voltage command values of the main converter 3. The logic unit 308 adds dead time to prevent an element short circuit, and outputs an ON/OFF signal each for the semiconductor switching elements (elements Sₓ₇ to Sₓ₁₀) of the sub-converter 4. The dead time generation unit 312 generates signals corresponding to the number of the elements of the sub-module 7 from the ON/OFF signals, and dead time is added to prevent a failure caused by an element short circuit. The zero-voltage generation unit 313 shifts the switching pulses in accordance with the current direction in order to implement the operation of the switching state 3 and the switching state 4 in which the voltage between the terminals of the sub-converter 4 becomes zero.

The transition of each of the modes and the switching states in the cases where the current direction is positive and negative will be described with reference to FIG. 7A, and FIG. 7B, respectively. Note that, the expression in an oval indicates, from the left, the type of mode, the output terminal voltage Vxo, and the open/close setting of the respective switches of the elements Sₓ₇ to Sₓ₁₀.

When the current direction is positive, as shown in FIG. 7A, five levels are output by switching seven modes (M1, M2, M3, M4a, M4b, M5, and M6). When the current direction is negative, as shown in FIG. 7B, five levels are output by switching seven modes (M1, M2, M4c, M4d, M3, M5, and M6). By using the zero-voltage generation unit 313, four modes (M4a, M4b, M4c, and M4d) are newly added, and there is an effect in that a zero voltage can be output.

FIG. 8 shows the transition of the modes that are described with reference to FIG. 7A when the current direction is positive, as indicated using the current paths in the circuit of FIG. 2 and FIG. 9 shows the transition of the modes that are described with reference to FIG. 7B when the current direction is negative, as indicated by the current paths in the circuit of FIG. 2.

When the current direction is positive, as shown in FIG. 8, at the mode M3, by turning on only the element Sₓ₈, the current flows through the element Sₓ₈ and the diode of the element Sₓ₁₀, whereby it is possible to transition to mode M4a in which the zero voltage is output. Next, when the element Sₓ₉ is turned on, the current flows through the element Sₓ₈, the capacitor Csx, and the element Sₓ₉ in this order, so that it is possible to transition to the mode M5 in which -Vxs is output.

At the mode, by turning off the element Sₓ₈, the current flows through the diode of Sₓ₇ to the element Sₓ₉, resulting in the transition from the mode M5 to the mode M4b in which the zero voltage is output. By turning off the element Sₓ₉, the current flows through the diode of the element Sₓ₇, the capacitor Csx, and the diode of the element Sₓ₁₀ in this order, resulting in the transition to the mode M3 in which +Vsx is output.

When the current direction is negative, as shown in FIG. 9, at the mode M2, by turning on only the element Sₓ₁₀, the current flows through the element Sₓ₈ and the diode of the element Sₓ₁₀, and it is possible to transition to the mode M4c in which the zero voltage is output. Next, when the element Sₓ₁₀ is turned off, the current flows through the element Sₓ₈, the capacitor Csx, and the element Sₓ₉ in this order, and it is possible to transition to the mode M3 in which -Vsx is output.

At the mode M3, by turning on the element Sₓ₇, the current flows through the diode of the element Sₓ₉ to the element Sₓ₇, and it is possible to transition to the mode M4d in which the zero voltage is output. At the mode M4d, by turning on the element Sₓ₁₀, the current flows through the element Sₓ₁₀, the capacitor Csx, and the element Sₓ₇ in this order, and it is possible to transition to the mode M2 in which +Vsx is output.

Next, the transition of the modes in a case where the zero-voltage generation unit 313 is provided and not provided will be described with reference to FIG. 10A to FIG. 10D. FIG. 10A shows time-series transition in the operation settings (modes) set on the switching elements when the direction of the current is positive and the zero-voltage generation unit 313 is not provided, and FIG. 10B shows time-series transition in the modes in the sub-module 7 when the direction of the current is positive and the zero-voltage generation unit 313 is provided. Further, FIG. 10C shows time-series transition in the switching operations when the direction of the current is negative and the zero-voltage generation unit 313 is not provided, and FIG. 10D shows time-series transition in the modes in the sub-module 7 when the direction of the current is negative and the zero-voltage generation unit 313 is provided. In FIG. 10A to FIG. 10D, each of the switch settings of the elements Sₓ₇ to Sₓ₁₀ is shown from the upper stage to the lower stage, and the lowest stage shows the outputs voltage.

When the zero-voltage generation unit 313 is not provided, as shown in FIG. 10A and FIG. 10C, none of the four modes (M4a, M4b, M4c, and M4d) exists, and only +Vsx or -Vsx can be output. On the other hand, by applying the zero-voltage generation unit 313 that delays the switching of the element Sₓ₉ or the element Sₓ₁₀ in accordance with the current polarity, it is possible to generate four modes (M4a, M4b, M4c, and M4d) as shown in FIG. 10B and FIG. 10D, whereby the zero voltage can be output.

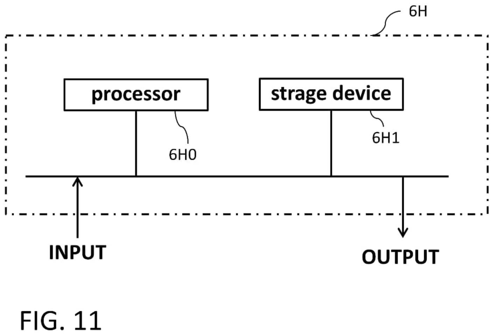

Note that, as shown in FIG. 11, an example of hardware 6H of the control unit 6 or a plurality of the controllers constituting the control unit 6 in the present disclosure may include a processor 6H0 and a storage device 6H1. Although not shown, the storage device includes a volatile storage device such as a random access memory and a nonvolatile auxiliary storage device such as a flash memory. Further, an auxiliary storage device such as a hard disk may be provided instead of the flash memory. The processor 6H0 executes a program input from the storage device 6H1. In this case, the program is input from the auxiliary storage device to the processor 6H0 via the volatile storage device. Furthermore, the processor 6H0 may output data such as a calculation result to the volatile storage device of the storage device 6H1, or may store data in the auxiliary storage device via the volatile storage device. The processor 6H0 may have a communication function, or it may include a communication unit (not shown).

Note that, although various exemplary embodiments and examples are described in the present disclosure, various features, aspects, and functions described in one or more embodiments are not inherent in an application of the contents disclosed in a particular embodiment, and can be applicable alone or in their various combinations to each embodiment. Accordingly, countless variations that are not illustrated are envisaged within the scope of the art disclosed in the specification of the present disclosure. For example, the case where at least one component is modified, added or omitted, and the case where at least one component is extracted and combined with a component disclosed in another embodiment are included.

As described above, the power conversion device 10 of the present disclosure includes: the inductor 2 provided for each of the phase (R, S, T) on the AC side; the main converter 3 that is connected to the inductor 2 on the one end side and in which the DC positive electrode (P), the DC negative electrode (N), and the neutral point(O) are set on the other end side; the capacitor circuit 5 having the positive electrode terminal (P), the negative electrode terminal (N), and the neutral point (O) that are to be connected to the DC side; the sub-converter 4 including the capacitor Csx and a plurality of the semiconductor switching elements (elements Sₓ₇ to Sₓ₁₀), being connected between the neutral point (O) of the capacitor circuit 5 and the neutral point (O) of the main converter 3, and configured such that the capacitor voltage changes in accordance with the combination of the open/close settings (switching states 1 to 6, modes M1 to M6) on a plurality of the semiconductor switching elements (elements Sₓ₇ to Sₓ₁₀); and the control unit 6 to control operations of the main converter 3 and the sub-converter 4. This makes it possible to configure the sub-converter 4 with the low breakdown voltage semiconductor switching elements, thereby outputting multilevel voltages without increasing the size and weight of the device.

The control unit 6 is configured to perform control such that an absolute value of the capacitor voltage Vsx is lower than an absolute value of the voltage (capacitor voltage Vmp) of the positive electrode terminal (P) and an absolute value of the voltage (capacitor voltage Vmn) of the negative electrode terminal (N) of the capacitor circuit 5, whereby the voltage is balanced to ensure a stable operation.

The control unit 6 controls the sub-converter 4 such that a combination of the open/close settings (modes M1 to M6) in which the output voltage of the sub-converter 4 becomes zero differs in accordance with a direction of the current flowing through the inductor 2, whereby the bias in the operation among the elements Sₓ₇ to Sₓ₁₀ is leveled.

The control unit 6 is configured to delay the open/close operation of at least one element of a plurality of the semiconductor switching elements (Sₓ₇ to Sₓ₁₀) with respect to the other elements by a time corresponding to a period in which the output voltage of the sub-converter 4 is set to zero, whereby the zero-voltage period can be reliably controlled.

Also in the case where the control unit 6 selects a different element in accordance with the direction of the current flowing through the inductor 2 as a target whose open/close operation is delayed, the bias in the operation among the elements Sₓ₇ to Sₓ₁₀ is leveled.

The sub-converter 4 is constituted by the full bridge circuit, and the control unit 6 is configured to control the sub-converter 4 so as to insert a delay of a time corresponding to a period during which the output voltage is set to be zero into a switching signal of the upper semiconductor switching element or the lower semiconductor switching element in accordance with the direction of the current flowing through the inductor 2, with respect to one leg of the full bridge circuit, and thus the zero-voltage period can be more reliably controlled.

The sub-converter 4 is configured as the full bridge circuit including the four elements Sₓ₇ to Sₓ₁₀ as a plurality of the semiconductor switching elements, and the capacitor Csx, whereby the capacitor voltage Vs can be reliably controlled.

When the main converter 3 is of the T-type method including at least two semiconductor switching elements and two semiconductor rectifier elements, the multilevel output can be reliably achieved.

### Description of Reference Numerals and Sign

1: power conversion circuit, 2: inductor, 3: main converter, 4: sub-converter, 5: capacitor circuit, 6: control unit, 7: sub-module, 10: power conversion device, Csx: capacitor, Sₓ₁ to Sₓ₄, Sₓ₇ to Sx₁₀: element (semiconductor switching element), Vsr, Vss, Vst, Vsx: capacitor voltage.

## Claims

1. A power conversion device comprising:
an inductor provided for each of phases on an AC side;
a main converter that is connected to the inductor on one end side and in which a DC positive electrode, a DC negative electrode, and a neutral point are set on the other end side;
a capacitor circuit having a positive electrode terminal, a negative electrode terminal, and a neutral point that are to be connected to a DC side;
a sub-converter including a capacitor and a plurality of semiconductor switching elements, being connected between the neutral point of the capacitor circuit and the neutral point of the main converter, and configured such that a capacitor voltage changes in accordance with a combination of open/close settings on the plurality of semiconductor switching elements; and
a control unit to control operations of the main converter and the sub-converter.

2. The power conversion device according to claim 1, wherein the control unit performs control such that an absolute value of the capacitor voltage is lower than an absolute value of a voltage of the positive electrode terminal and an absolute value of a voltage of the negative electrode terminal of the capacitor circuit.

3. The power conversion device according to claim 1 or 2, wherein the control unit controls the sub-converter such that a combination of the open/close settings in which an output voltage of the sub-converter becomes zero differs in accordance with a direction of a current flowing through the inductor.

4. The power conversion device according to any one of claims 1 to 3, wherein the control unit delays an open/close operation of at least one element of the plurality of semiconductor switching elements with respect to the other elements by a time corresponding to a period in which the output voltage of the sub-converter is set to zero.

5. The power conversion device according to claim 4, wherein the control unit selects a different element in accordance with a direction of a current flowing through the inductor as a target whose open/close operation is delayed.

6. The power conversion device according to any one of claims 3 to 5, wherein the sub-converter is constituted by a full bridge circuit, and the control unit controls the sub-converter so as to insert a delay of a time corresponding to a period during which the output voltage is set to be zero into a switching signal of an upper semiconductor switching element or a lower semiconductor switching element in accordance with the direction of the current flowing through the inductor, with respect to one leg of the full bridge circuit.

7. The power conversion device according to any one of claims 1 to 6, wherein the sub-converter is a full bridge circuit including four elements as the plurality of semiconductor switching elements, and the capacitor.

8. The power conversion device according to any one of claims 1 to 7, wherein the main converter is of a T-type method including at least two semiconductor switching elements and two semiconductor rectifier elements.
